# FASCICULE DE BREVET EUROPEEN

(11) **EP 0 936 194 B1**
(45) Date de publication et mention de la délivrance du brevet: **04.10.2001**
(21) Numéro de dépôt: 99400323.4
(22) Date de dépôt: 11.02.1999
(51) Int. Cl.: C03B 37/012, C03B 37/014

(54) **Procédé de dépôt externe de silice dopée sur une préforme de fibre optique**
Verfahren zur Aussenabscheidung von dotiertem Quarz auf einer Vorform für optische Fasern
Process for external deposition of doped silica on an optical fibre preform

(30) Priorité: 12.02.1998 FR 9801677
(43) Date de publication de la demande: 18.08.1999
(73) Titulaire: ALCATEL, 75008 Paris (FR)
(72) Inventeur: Campion, Jean-Florent, 92270 Bois Colombes (FR); Saugrain, Jean-Maxime, 78110 Le Vesinet (FR); Lavallade, Christelle, 95800 Courdimanche (FR); Chariot, Jean-François, 78160 Marly le Roi (FR); Fauche, Rémi, 78260 Acheres (FR); Jolly, Jacques, 95310 Saint Ouen L'Aumone (FR); Jourdier, Pierryle, 75008 Paris (FR); Meilleur, Rosine, 78180 Montigny le Bretonneux (FR)
(74) Mandataire: Laroche, Danièle

(56) Documents cités:
- EP-A- 0 086 132
- EP-A- 0 360 479
- EP-A- 0 578 553
- DE-A- 3 206 180
- FR-A- 2 446 264
- PATENT ABSTRACTS OF JAPAN vol. 96, no. 5, 31 mai 1996 & JP 08 026763 A (NT&T CORP.), 30 janvier 1996

## Description

L'invention concerne un procédé de fabrication d'une préforme de fibre optique, comprenant la formation d'au moins une couche de dépôt externe à base de silice par dépôt de silice sur une préforme primaire, consistant en un barreau comportant principalement de la silice et comportant une partie périphérique externe à base de silice.

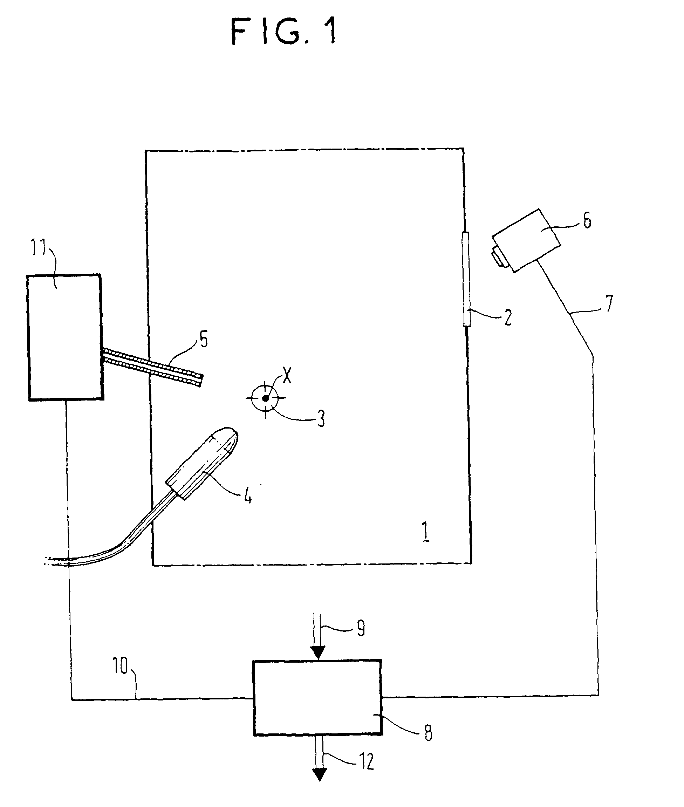

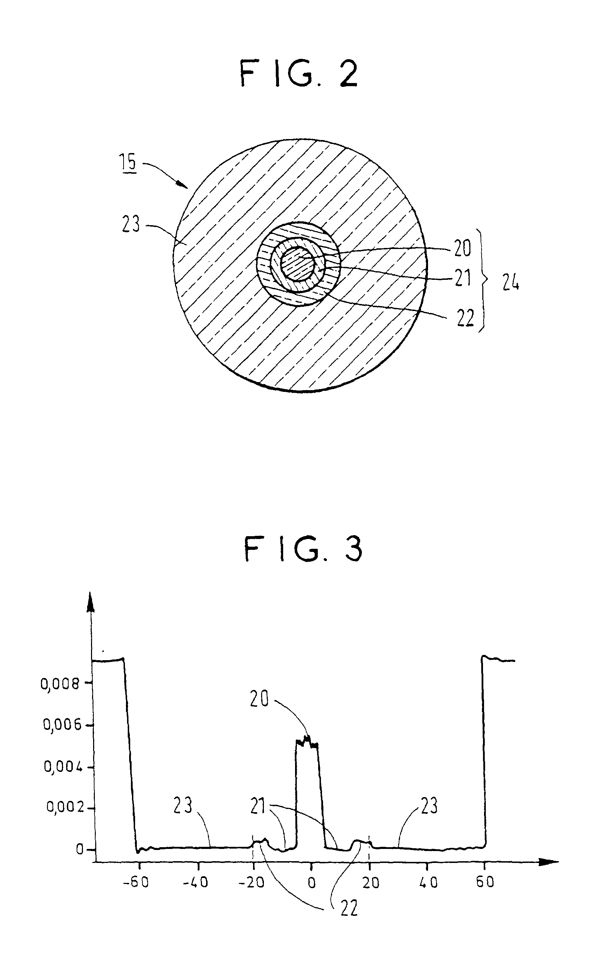

D'une manière connue, on procède à un dépôt externe, illustré par exemple par la figure 1 dans le cas d'une recharge plasma, sur une préforme primaire pour grossir son diamètre et ainsi augmenter la longueur de la fibre optique, illustrée par la figure 2, fabriquée lors de l'étirage à chaud de la préforme ainsi obtenue. La préforme primaire, quelle soit réalisée par la technique du MCVD ("Modified Chemical Vapor Deposition" en anglais) ou par la technique du VAD ("Vapor Axial Deposition" en anglais), est un barreau comprenant principalement de la silice et comportant une partie périphérique externe à base de silice, ladite partie périphérique externe consistant le plus souvent en un tube à base de silice formant paroi latérale de la préforme primaire, et ledit barreau comprenant, à l'intérieur de la partie périphérique externe, une gaine optique et un coeur qui présentent entre eux une différence d'indice de réfraction. La silice, généralement sous forme de grains de silice dans le cas où le dépôt externe se fait par recharge plasma, est déposée sur la partie périphérique externe à base de silice de la préforme primaire de sorte que la couche de recharge présente sensiblement le même indice de réfraction que ladite partie périphérique.

La figure 1 représente de façon très schématique un dispositif de recharge plasma, comprenant une enceinte 1, pourvue d'une fenêtre transparente 2, une préforme 3, d'axe longitudinal X, vue de bout, vers laquelle sont dirigées une torche à plasma 4 et une buse 5 d'alimentation en grains de recharge. A l'extérieur de l'enceinte 1, une caméra CCD 6, disposée derrière la fenêtre 2, est pointée sur la préforme 3. Elle fournit une mesure du diamètre de la préforme, à l'endroit où elle est pointée, sous la forme d'une valeur transmise par une liaison 7 à un dispositif 8 de commande du processus de recharge. Le dispositif 8 reçoit, par une liaison multiple 9, d'autres indications sur des conditions du processus de recharge. Sous l'effet d'un programme interne de conduite du processus de recharge, le dispositif 8 fournit, à débit de grains constant, sur une liaison de sortie 10, alimentant un dispositif de commande 11, une valeur de commande du positionnement de la buse 5 par rapport à la préforme 3, qui positionne en conséquence la buse 5 par déplacement de ladite buse 5 le long d'un axe parallèle à l'axe longitudinal X de la préforme 3. Le dispositif 8 fournit aussi, sur une liaison multiple de sortie 12, d'autres valeurs de commande déterminant d'autres aspects du processus de commande.

Tous les éléments du dispositif illustré par la figure 1 sont bien connus de l'homme du métier. D'autres, qui ne sont pas représentés, sont également bien connus. C'est ainsi que des moyens de support de la préforme 3, avec entraînement en rotation et en translation, un chariot de support de la torche à plasma 4 et de la buse 5, avec entraînement en translation, parallèlement à l'axe longitudinal de la préforme 3, des moyens d'évaluation de la position angulaire de la préforme 3 et de la position longitudinale du chariot sont par exemple décrits dans la demande de brevet européen EP-A1-0.440.130. Tous ces moyens permettent de façon connue d'éloigner la préforme 3 de la torche 4 au fur et à mesure du grossissement de la préforme 3. Des moyens permettant de pointer la caméra 6 en des endroits successifs de la préforme 3 dans une passe de mesure, qui pourraient prendre la forme d'un second chariot au déplacement couplé avec celui du premier chariot, appartiennent également à la technique connue.

La recharge plasma s'opère par passes, de droite à gauche, puis de gauche à droite, au cours desquelles la torche à plasma 4 et la buse 5 balaient la longueur de la préforme 3.

Tout le processus de commande est optimisé pour obtenir un rendement important de la quantité de dépôt de silice, à vitesse de translation donnée et pour un profil d'indice de réfraction de la recharge donné.

Simultanément la caméra 6 opère une passe de mesure, fournissant des valeurs successives du diamètre de la préforme 3 sur toute sa longueur. De préférence pour simplifier, la caméra 6 n'effectue la mesure qu'une passe sur deux, par exemple de droite à gauche, tandis que durant la passe suivante la sortie de la caméra 6 n'est pas validée.

La figure 2 représente une vue en coupe schématique d'une fibre optique 15 fabriquée par étirage à chaud à partir d'une préforme 3 obtenue selon un procédé de dépôt externe à base de silice sur une préforme primaire 24 réalisée par exemple par le procédé MCVD. Les couches de la fibre optique 15 et de la préforme 3 se correspondant de façon homothétique, les mêmes numéros 20 à 24 sont utilisés pour la préforme 3 et pour la fibre optique 15 représentée à la figure 2. La préforme primaire 24 comprend un coeur optique 20, une gaine optique 21 et une partie périphérique externe 22. La préforme primaire 24 est réalisée selon le procédé MCVD par dépôt interne de couches à base de silice éventuellement dopée formant le coeur optique 20 et la gaine optique 21 dans le tube 22 suivi d'une transformation, par rétreint, du tube ainsi intérieurement revêtu en un barreau qui est la préforme primaire 24, puis la préforme finale 3 est réalisée par dépôt externe à base de silice de couches de dépôt externe 23 sur la préforme primaire 24.

Le problème qui se pose est d'obtenir une fibre optique avec un indice de réfraction constant à l'intérieur des épaisseurs issues de façon homothétique de la couche de dépôt externe à base de silice et de la partie périphérique externe à base de silice de la préforme primaire lors de l'étirage à chaud. En effet, on constate un saut d'indice indésirable sur la fibre optique obtenue après l'étirage à chaud de la préforme à l'endroit correspondant de façon homothétique à la frontière entre la partie périphérique externe et la couche de dépôt externe à base de silice, ladite partie périphérique externe ne subissant vraisemblablement pas lors de l'étirage à chaud les mêmes contraintes de compression que la couche de dépôt externe.

A cet effet, l'invention a pour objet un procédé de fabrication d'une préforme de fibre optique, comprenant la formation d'au moins une couche de dépôt externe à base de silice par dépôt de silice sur une préforme primaire, consistant en un barreau comprenant principalement de la silice et comportant une partie périphérique externe à base de silice, caractérisé en ce que l'on ajuste la viscosité de la couche de dépôt externe pour qu'elle soit sensiblement identique à la viscosité de la partie périphérique externe de la préforme primaire par l'ajout à la silice, pour une partie substantielle, de préférence au moins 80% en poids, de manière encore plus préférée au moins 95% en poids de la couche de dépôt externe, d'au moins un dopant choisi dans le groupe formé par les composés suivants : CaF₂, MgF₂, AlF₃, B₂O₃ et Al₂O₃.

De préférence, si le dopant est choisi dans le groupe formé par CaF₂, MgF₂ et AlF₃, la proportion de dopant est comprise entre 5 et 100, de préférence entre 10 et 40, ppm en poids d'élément fluoré (c'est-à-dire le calcium, le magnésium ou l'aluminium) par rapport à la silice. En effet, il est nécessaire de disposer de suffisamment de dopant pour obtenir un effet significatif sur la viscosité. D'autre part si la proportion dudit dopant est trop importante, on observe un problème de stabilité du diamètre de la fibre optique fabriquée à partir de la préforme, la variation d'indice autour de la valeur nominale pouvant être trop importante par rapport à la fourchette de tolérance que se fixe le fibreur.

De préférence, si le dopant est choisi dans le groupe formé par B₂O₃ et Al₂O₃, la proportion de dopant est comprise entre 0,01 et 1%, de préférence entre 0,1 et 0,6%, en poids d'élément oxydé (c'est-à-dire le bore ou l'aluminium) par rapport à la silice. En effet, il est nécessaire de disposer de suffisamment de dopant pour obtenir un effet significatif sur la viscosité. D'autre part, si la proportion dudit dopant est trop importante, on observe à l'inverse l'apparition d'un nouveau saut d'indice, car le dopant a trop ramolli la silice.

Selon un mode de réalisation de l'invention, la silice est sous forme de grains de taille généralement comprise entre 50 et 300 µm.

En dopant la silice par un dopant dans les proportions préférées décrites ci-dessus, on forme une couche de dépôt externe qui possède une viscosité sensiblement égale à celle de la partie périphérique externe de la préforme primaire lors de l'étirage à chaud, ce qui conduit à un étirage uniforme dans un plan transversal à la préforme, la partie périphérique externe à base de silice ainsi que la couche de dépôt externe étant sensiblement dans un même état de contrainte. D'où il résulte que les épaisseurs de la fibre optique issues de façon homothétique de la couche de recharge et de la partie périphérique externe à base de silice conservent un même indice de réfraction.

Avantageusement, la proportion de dopant(s) utilisé(s) est telle que leur diffusion à travers la partie périphérique externe à base de silice dans la gaine optique et dans le coeur de la fibre optique n'est pas significative au point d'avoir un effet préjudiciable sur les propriétés d'atténuation optique.

Le dopant est de préférence apporté dans une proportion par rapport à la silice qui permet un ajustement en viscosité de la couche de recharge et de la partie périphérique externe de la préforme primaire sans modifier sensiblement l'indice de réfraction de la couche de recharge par rapport à celui de ladite partie périphérique externe à base de silice.

D'autres caractéristiques et avantages de l'invention apparaîtront à la lecture de la description d'un mode particulier de réalisation, illustré par les figures 1 à 5, dans le cas de deux dopants différents à savoir l'alumine et le fluorure de calcium.

La figure 1, déjà décrite, représente de façon très schématique un dispositif de recharge plasma dans lequel peut être mis en oeuvre le procédé de l'invention.

La figure 2, déjà décrite, représente une vue en coupe schématique d'une fibre optique qui peut être obtenue selon le procédé selon l'invention, à partir d'une préforme primaire réalisée par exemple par le procédé MCVD.

La figure 3 montre un profil d'indice d'une fibre optique étirée à chaud à partir d'une préforme ayant une couche de dépôt externe à base de silice non dopée, selon l'art antérieur.

La figure 4 montre un profil d'indice d'une fibre optique étirée à chaud à partir d'une préforme ayant une couche de dépôt externe à base de silice dopée par de l'alumine, selon l'invention.

La figure 5 montre un profil d'indice d'une fibre optique étirée à chaud à partir d'une préforme ayant une couche de dépôt externe à base de silice dopée par du fluorure de calcium, selon l'invention.

Dans les exemples suivants, un procédé pour recharger une préforme primaire est mis en oeuvre selon un mode particulier de l'invention, illustré par la figure 1 précédemment décrite, au moyen d'un banc de recharge qui comprend un tour maintenant une préforme primaire 24 puis uen préforme rechargée 3, cylindriques, en rotation sur elle(s)-même(s), et une torche à plasma 4, d'axe perpendiculaire à l'axe X de la préforme. La torche à plasma 4 est mobile en translation et est déplacée parallèlement à la préforme 3 pour la préchauffer.

La préforme primaire 24 est issue d'un procédé type MCVD, et illustrée sur la figure 2 précédemment décrite. Elle est constituée d'une partie périphérique externe 22 à base de silice, qui est un tube de silice, à l'intérieur duquel ont été déposés une gaine optique 21 et un coeur 20. On utilise de préférence un tube 22 de silice ultra pure pour augmenter les propriétés d'atténuation de la fibre optique 15 fabriquée à partir de la préforme 3.

La formation d'une couche de recharge 23 commence lorsque la silice est déposée sous forme de grains sur le tube 22 de silice de la préforme primaire 24. En présence de plasma, les grains de silice sont simplement déposés par gravité à partir d'un conduit d'alimentation qui est la buse 5 et qui est déplacé en translation parallèlement à la préforme primaire 24. Les grains de silice sont fusionnés puis vitrifiés sous une température de l'ordre de 2300 degrés Celsius (°C) par le plasma. L'opération de recharge s'effectue dans une cabine close pour assurer une protection contre des perturbations électromagnétiques et contre un dégagement d'ozone émis par la torche à plasma 4.

Selon l'invention, on dépose simultanément des particules de dopant, soit l'alumine soit le fluorure de calcium, en les mélangeant aux grains de silice dans le conduit d'alimentation 5. Il est aussi possible d'envoyer la silice par un premier conduit d'alimentation et les particules de dopant par un second conduit d'alimentation débouchent à proximité de la torche à plasma 4 sensiblement près du premier conduit 5 d'alimentation en silice. Comme indiqué précédemment, l'introduction des particules de dopant dans la couche de recharge 23 confère à cette dernière une viscosité sensiblement égale à celle de la partie périphérique externe 22 de la préforme primaire, qui est le tube de silice, lors de l'étirage à chaud conduisant à la fabrication d'une fibre optique 15.

Les particules de dopant sont introduites dans une proportion relative par rapport aux grains de silice qui est fonction de la pureté en silice des grains et du tube 22 de la préforme primaire 24.

### Exemple 1 : Utilisation de l'alumine

On utilise une proportion de 0,1% de particules d'alumine Al₂O₃, en proportion en poids d'élément oxydé, l'aluminium, par rapport à de la silice naturelle, pour recharger la préforme primaire 24 qui comprend le tube 22 de silice ultra pure. Dans ces conditions, on obtient une viscosité de la couche rechargée 23 sensiblement égale à celle du tube 22 de la préforme primaire 24 lors de l'étirage à chaud.

Il est prévu d'utiliser des particules d'alumine de qualité ultra pure dont la taille maximale est typiquement de quelques dizaines de micromètres (µm). De préférence, on utilise des particules d'alumine pyrogénée dont la taille est inférieure à 50 µm pour favoriser une distribution homogène des particules dans la couche de recharge 23.

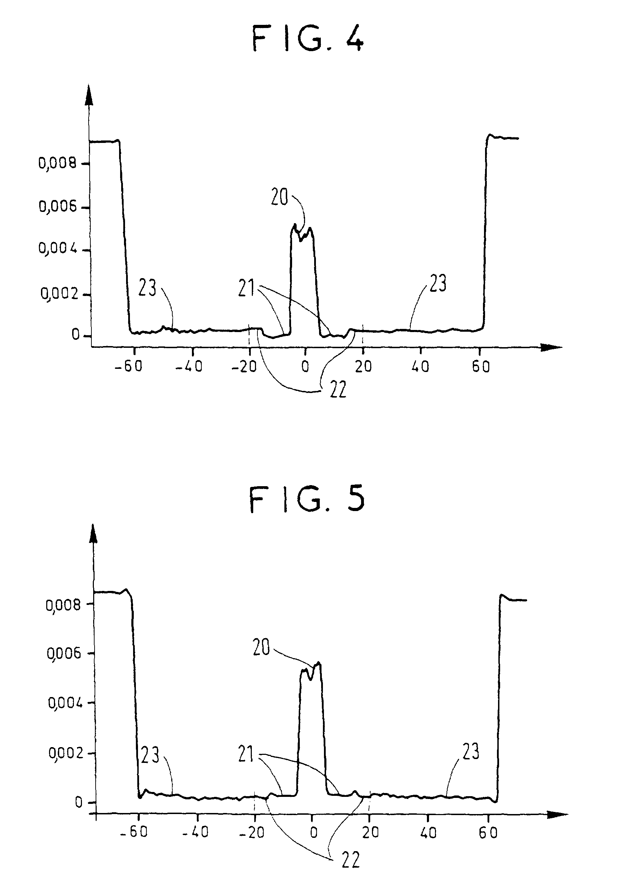

Un profil d'indice de réfraction, c'est-à-dire une courbe ayant pour abscisse la distance par rapport au centre de la fibre 15, en µm, et pour ordonnée la valeur de l'indice de réfraction, est représenté dans les figures 3 et 4, où la fibre optique 15 a été étirée à chaud à partir de la préforme primaire rechargée 3 respectivement selon l'art antérieur et selon l'invention. Le tube 22 de silice de la préforme primaire 24 contient 1200 parties par million (ppm) de chlore, et la couche de recharge 23 est constituée de grains de silice naturelle.

Dans le premier cas, représenté sur la figure 3, la couche de recharge 23 est à base de silice non dopée. On observe un profil d'indice, pour une fibre optique 15 donnée, comportant un saut à environ 20 µm du centre de la fibre optique 15, qui correspond à l'interface entre les deux épaisseurs issues de façon homothétique de la couche de recharge 23 et du tube de silice 22. Les parties de profil d'indice dues au coeur 20 et à la gaine 21 sont aussi représentées sur la figure 3.

Dans le deuxième cas, représenté sur la figure 4, où de la même façon que sur la figure 3 sont représentés les profil d'indice des parties 20, 21, 22 et 23 de la fibre optique 15, les grains de silice naturelle de la couche de recharge 23 sont dopés à hauteur de 0,1% d'alumine pyrogénée. On observe un profil d'indice sensiblement plat à environ 20 µm du centre de la fibre optique 15, avec une disparition sensible du saut d'indice observé sur la figure 3. Ce résultat illustre l'influence de l'alumine apportée dans la couche de recharge 23 sur la conservation d'un même indice de réfraction entre les épaisseurs de la fibre optique 15 issues de façon homothétique de cette couche de recharge 23 et du tube 22 de silice de la préforme primaire 24 lors de l'étirage à chaud.

Il est également prévu d'introduire les particules d'alumine sous la forme de grains de silice synthétique fortement dopés en alumine, de l'ordre de 30% en poids, ce qui permet d'incorporer l'alumine dans un réseau de silice préalablement au dépôt, et ainsi d'améliorer l'homogénéité de la couche de recharge 23.

De plus, l'introduction des particules de Al₂O₃, respectivement de AlF₃ voire de B₂O₃, dans la couche de recharge 23 réduit avantageusement les pertes d'atténuation engendrées par la présence de l'hydrogène dans la fibre optique 15.

A titre d'exemple, une fibre optique 15 fabriquée à partir d'une préforme rechargée 3 en l'absence de particules d'alumine, et testée dans des conditions normalisées de pression extérieure d'hydrogène, présente une atténuation à 1,55 µm qui passe de 0,1 décibel par kilomètre (dB/km) à 0,5 dB/km. En présence de particules d'alumine dans la couche de recharge 23 de la préforme 3, selon les proportions déterminées ci-dessus, la fibre optique 15 présente à la même longueur d'onde une atténuation due à l'hydrogène qui passe de 0,05 dB/km à 0,1 dB/km, ce qui représente une augmentation d'atténuation moindre.

### Exemple 2 : Utilisation du fluorure de calcium

On utilise une proportion de 30 ppm de particules de fluorure de calcium CaF₂, en proportion en poids d'élément fluoré, le calcium, par rapport à de la silice naturelle, pour recharger la préforme primaire 24 qui comprend le tube 22 de silice ultra pure. Dans ces conditions, on obtient une viscosité de la couche rechargée 23 sensiblement égale à celle du tube 22 de la préforme primaire 24 lors de l'étirage à chaud.

Il est prévu d'utiliser des particules de fluorure de calcium de qualité ultra pur dont la taille maximale est typiquement de quelques micromètres (µm). De préférence, on utilise des particules de fluorure de calcium dont la taille est inférieure à 10 µm pour favoriser une distribution homogène des particules dans la couche de recharge 23.

Un profil d'indice de réfraction le long d'un diamètre d'une fibre optique 15 est représentée à la figure 5, où une fibre optique 15 a été étirée à chaud à partir d'une préforme primaire rechargée 3. Le tube 22 de silice de la préforme primaire 24 contient 1200 parties par million (ppm) de chlore, et la couche de recharge 23 est constituée de grains de silice naturelle.

Dans le deuxième exemple, représenté sur la figure 5, où de la même façon que sur la figure 3 sont représentés les profil d'indice des parties 20, 21, 22 et 23 de la fibre optique 15, les grains de silice naturelle de la couche de recharge 23 sont dopés à hauteur de 30 ppm de fluorure de calcium apporté sous forme de particules de fluorure de calcium. On observe un profil d'indice sensiblement plat à environ 20 µm du centre de la fibre optique 15, avec une disparition sensible du saut d'indice observé sur la figure 3. Ce résultat illustre l'influence du fluorure de calcium apporté dans la couche de recharge 23 sur la conservation d'un même indice de réfraction entre les épaisseurs de la fibre optique 15 issues de façon homothétique de cette couche de recharge 23 et du tube 22 de silice de la préforme primaire 24 lors de l'étirage à chaud.

Il est également prévu d'introduire les particules de fluorure de calcium sous la forme de grains de silice synthétique fortement dopés en fluorure de calcium, ce qui permet d'incorporer le fluorure de calcium dans un réseau de silice préalablement au dépôt, et ainsi d'améliorer l'homogénéité de la couche de recharge 23.

Il faut noter que, quel que soit le dopant utilisé selon le procédé de l'invention, l'introduction des particules de dopant est compatible avec un traitement par fluoration de grains de silice naturelle.

## Revendications

1. Procédé de fabrication d'une préforme (3) de fibre optique (15), comprenant la formation d'au moins une couche de dépôt externe (23) à base de silice par dépôt de silice sur une préforme primaire (24), consistant en un barreau comprenant principalement de la silice et comportant une partie périphérique externe (22) à base de silice,
**caractérisé en ce que** l'on ajuste la viscosité de la couche de dépôt externe (23) pour qu'elle soit sensiblement identique à la viscosité de la partie périphérique externe (22) de la préforme primaire (24) par l'ajout à la silice, pour une partie substantielle de la couche de dépôt externe (23), d'au moins un composé choisi dans le groupe formé par les composés suivants : CaF₂, MgF₂, AlF₃, B₂O₃ et Al₂O₃.

2. Procédé selon la revendication 1 tel que, si le dopant est choisi dans le groupe formé par CaF₂, MgF₂ et AlF₃, la proportion de dopant est comprise entre 5 et 100 ppm en poids d'élément fluoré par rapport à la silice.

3. Procédé selon la revendication 1 tel que, si le dopant est choisi dans le groupe formé par B₂O₃ et Al₂O₃, la proportion de dopant est comprise entre 0,01 et 1% en poids d'élément oxydé par rapport à la silice.

4. Procédé selon l'une des revendications 1 à 3 tel que la silice dopée est ajoutée sous forme de grains de taille généralement comprise entre 50 et 300 µm.

5. Procédé selon l'une des revendications 1 à 4 tel que la partie périphérique externe (22) à base de silice de la préforme primaire (24) est un tube de silice ultra pure.

## Patentansprüche

1. Verfahren zur Herstellung einer Vorform (3) einer optischen Faser (15), das die Bildung wenigstens einer Aussenabscheidungslage (23) auf Silikabasis durch Abscheidung von Silika auf eine primäre Vorform (24), die aus einem Stab besteht, der hauptsächlich Silika aufweist und einen äußeren peripheren Teil (22) auf Silikabasis hat, umfasst,
**dadurch gekennzeichnet, dass** die Viskosität der Aussenabscheidungslage (23) durch Zugeben wenigstens einer Verbindung zum Silika, die aus der Gruppe bestehend aus CaF₂, MgF₂, AlF₃, B₂O₃ und Al₂O₃ gewählt ist und einen wesentlichen Teil der Aussenabscheidungslage (23) ausmacht, eingestellt wird, so **dass** sie zur Viskosität des äußeren peripheren Teils (22) der primären Vorform (24) im wesentlichen identisch ist

2. Verfahren nach Anspruch 1, bei dem bei Wahl des Dotiermittels aus der Gruppe bestehend aus CaF₂, MgF₂ und AlF₃ der Anteil an Dotiermittel zwischen 5 und 100 ppm in Gewicht des fluorierten Elements bezogen auf das Silika, liegt.

3. Verfahren nach Anspruch 1, bei dem bei Wahl des Dotiermittels aus der Gruppe bestehend aus B₂O₃ und Al₂O₃ der Anteil an Dotiermittel zwischen 0,01 und 1 % in Gewicht des oxidierten Elements bezogen auf das Silika, liegt.

4. Verfahren nach einem der Ansprüche 1 bis 3, bei dem das dotierte Silika in Form von Körnern mit einem Umfang, der im allgemeinen zwischen 50 und 300 µm liegt, zugegeben wird.

5. Verfahren nach einem der Ansprüche 1 bis 4, bei dem der äußere periphere Teil (22) auf Silikabasis der primären Vorform (24) ein Rohr aus ultrareinem Silika ist.

## Claims

1. A method of manufacturing an optical fiber preform (3) comprising: forming at least one silica-based outer deposition layer (23) by depositing silica on a primary preform (24) constituted by a bar mainly comprising silica and including a silica-based outer peripheral portion (22),
the method being **characterized in that** the viscosity of the outer deposition layer (23) is adjusted to be substantially identical to the viscosity of the outer peripheral portion (22) of the primary preform (24) by adding to the silica, over a substantial portion of the outer deposition layer (23), at least one compound selected from the group formed by the following compounds: CaF₂, MgF₂, AlF₃, B₂O₃, and Al₂O₃.

2. A method according to claim 1, such that if the dopant is selected from the group constituted by CaF₂, MgF₂, and AlF₃, the proportion of the dopant lies in the range 5 ppm to 100 ppm by weight of the fluorided element relative to silica.

3. A method according to claim 1, such that, if the dopant is selected from the group formed by B₂O₃ and Al₂O₃, the proportion of dopant lies in the range 0.01% to 1% by weight of the oxidized element relative to the silica.

4. A method according to any one of claims 1 to 3, such that the doped silica is added in the form of grains of a size generally lying in the range 50 µm to 300 µm.

5. A method according to any one of claims 1 to 4, such that the silica-based outer peripheral portion of the primary preform (24) is a tube of ultra pure silicon.
